# EUROPEAN PATENT APPLICATION

(11) **EP 2 453 305 A1**
(43) Date of publication of application: **16.05.2012**
(21) Application number: 11188605.7
(22) Date of filing: 10.11.2011
(51) Int. Cl.: G03B 3/10, G03B 13/34, F03G 7/06, H04N 5/225

(54) **Drive module and electronic apparatus**

(30) Priority: 12.11.2010 JP 2010253976
(71) Applicant: Seiko Instruments Inc., Chiba-shi, Chiba (JP)
(72) Inventor: Kotanagi, Susumu, Chiba-shi,, Chiba (JP); Tsuchiya, Tadashi, Chiba-shi,, Chiba (JP)
(74) Representative: Cloughley, Peter Andrew

(57) **Abstract**

It is an object of the invention to provide a drive module and an electronic apparatus which are capable of satisfying the requirements of an electromagnetic shield. In a drive module 1 including: a drive unit 2 including a cylindrical supporting member 5, a driven member 6 accommodated inside the supporting member 5, and driving means 11 configured to reciprocally move the driven member 6 along the axial direction of the supporting member 5; and a top-covered cylindrical cover 3 configured to be attached to the drive unit 2 and cover the drive unit 2, the cover 3 includes a metallic exterior packaging member 30 configured to cover at least an outer periphery of the drive unit 2 and a resin-made spacer 31 attached to the exterior packaging member 30 and the spacer 31 is formed with engaging portions 36 configured to be engaged with the drive unit 2 to achieve positioning of the cover 3.

## Description

The present invention relates to a drive module suitable, for example, for adjusting the focus position by driving an optical system or driving a movable member and using the same as an actuator, and an electronic apparatus having the drive module.

In the related art, various types of compact electronic apparatuses having a drive module mounted thereon are disclosed. For example, a cellular phone having a camera function has a drive module configured to drive a lens frame (driven member) for holding a lens unit mounted thereon so as to achieve auto focusing or zooming.

As a drive module of this type in the related art, a configuration including a cylindrical module frame (supporting member) fixed to a base substrate, a lens frame accommodated inside the module frame, driving means configured to reciprocally move the lens frame in the axial direction of the module frame, and a cover configured to cover the module frame, the lens frame and the driving means, for example, as shown in JP-A-2010-20177 (Patent Document 1) given below, is known.

The driving means described above includes a Shape Memory Alloy wire, a pair of holding members configured to hold both end portions of the Shape Memory Alloy wire respectively, and feeding members configured to feed electricity to the Shape Memory Alloy wire via the pair of holding members. The lens frame described above is provided with a projecting portion projected from an outer peripheral surface thereof, and an intermediate portion of the Shape Memory Alloy wire is hooked on an extremity key portion (hooking portion) of the projecting portion from below. The above-described cover is a top-covered cylindrical member having a peripheral wall portion which surrounds an outer periphery of the module frame and an upper wall portion provided on an upper end of the peripheral wall portion, and is formed with an engaging portion which engages the module frame via a leaf spring member on a lower surface of the upper wall portion.

According to the drive module configured as described above, the lens frame reciprocally moves relative to the module frame by expanding or contracting the Shape Memory Alloy wire by operating the feed of electricity to the Shape Memory Alloy wire. Accordingly, auto focusing or zooming is achieved by moving a lens unit held by the lens frame. Also, positioning of the cover in the heightwise direction is achieved by engagement of the engaging portion of the cover with the module frame via the leaf spring member, whereby dimensional accuracy of the drive module in the heightwise direction is secured.

However, in the drive module of the related art described above, since the cover is a resin-made member, there exists a problem of incapability of satisfying the requirements of an electromagnetic shield. Therefore, although it is conceivable to employ a cover formed of metal in order to satisfy the requirements of the electromagnetic shield, an inner surface of the cover is formed with the engaging portion as described above, and the shape of the inner surface of the cover is complex. Since it is difficult to manufacture the cover having the complex-shaped inner surface with metal, it is difficult to make the cover of the related art of metal.

In view of such problems of the related art described above, it is an object of the present invention to provide a drive module and an electronic apparatus which are capable of satisfying the requirements of an electromagnetic shield.

A drive module according to the present invention is a drive module includes: a drive unit including a cylindrical supporting member, a driven member accommodated inside the supporting member, and driving means configured to reciprocally move the driven member along the axial direction of the supporting member; and a top-covered cylindrical cover configured to be attached to the drive unit and cover the drive unit, wherein the cover includes a metallic exterior packaging member configured to cover at least an outer periphery of the drive unit and a resin-made spacer attached to the exterior packaging member, and the spacer is formed with an engaging portion configured to be engaged with the drive unit to achieve positioning of the cover.

With the characteristics as described above, since the drive unit is covered with the metallic exterior packaging member, the influence of the electromagnetic field from the outside is blocked. Also, since the resin-made spacer attached to the exterior packaging member can be formed easily into a complex shape, the engaging portion which engages the drive unit can easily be formed. Also, by the engaging portion of the above-described spacer engaged with the drive unit, the positioning of the cover is achieved, so that accuracy of assembly of the cover with respect to the drive unit is stabilized.

Preferably, the drive module according to the present invention is configured in such a manner that the drive means includes a Shape Memory Alloy wire held at both end portions thereof by holding portions and hooked at an intermediate portion to a hooking portion of the driven member, and a feeding member configured to feed electricity to the Shape Memory Alloy wire via the holding portions, and the spacer is formed with storage portions configured to accommodate the holding portions.

Accordingly, the driven member reciprocally moves relative to the supporting member by expanding or contracting the Shape Memory Alloy wire by operating the feed of electricity to the Shape Memory Alloy wire. Also, end portions of the Shape Memory Alloy wire held by the holding portions are accommodated in the storage portions of the resin-made spacer, contact between the end portions of the Shape Memory Alloy wire and the metallic exterior packaging member is prevented.

Also, an electronic apparatus according to the present invention includes the above-described drive module.

With these characteristics, the influence of the electromagnetic field from the outside on the drive module is blocked, and reliability of the operation of the electronic apparatus is improved.

According to the drive module and the electronic apparatus of the present invention, the requirements of the electromagnetic shield are satisfied.

Embodiments of the present invention will now be described by way of further example only and with reference to the accompanying drawings, in which:
Fig. 1 is an appearance perspective view of a drive module for explaining an embodiment of the present invention;
Fig. 2 is an exploded perspective view of the drive module for explaining the embodiment of the present invention;
Fig. 3 is an exploded perspective view of a drive unit for explaining the embodiment of the present invention;
Fig. 4 is an exploded perspective view of the drive module for explaining the embodiment of the present invention;
Fig. 5 is a partial cross-sectional view of the drive module for explaining the embodiment of the present invention;
Figs. 6A, 6B and 6C are drawings showing an electronic apparatus for explaining the embodiment of the present invention, in which Fig. 6A is a perspective view of a cellular phone with camera viewed from an operating plane, Fig. 6B is a perspective view of the cellular phone with camera viewed from a backside thereof, and Fig. 6C is a cross-sectional view diagrammatically showing a camera portion of the cellular phone with camera; and
Fig. 7 is an exploded perspective view of a drive module for explaining a modification of the present invention.

Referring now to the drawings, an embodiment of a drive module and an electronic apparatus according to the present invention will be described.

### [Drive Module]

In this embodiment, a drive module of a lens unit, not shown, in a camera will be described as an example. As an example of an actuator which drives the lens unit, a case where a Shape Memory Alloy wire is used will be exemplified in the description.

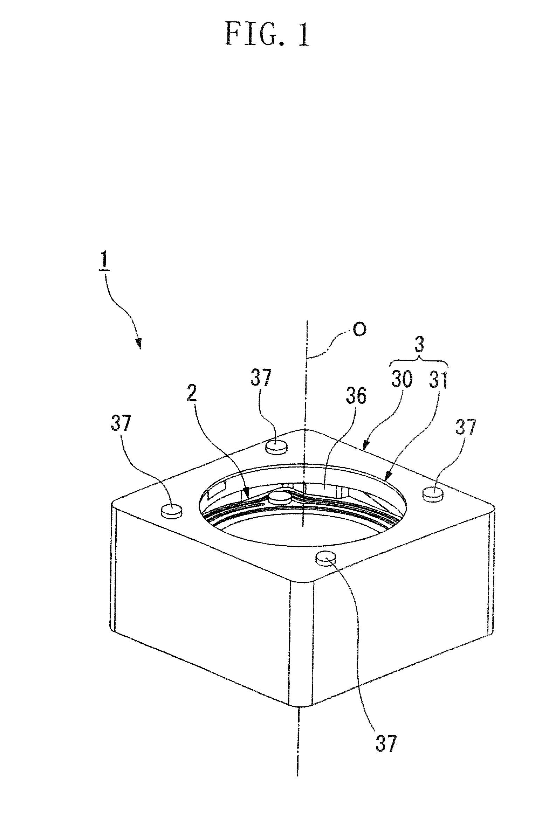

A drive module 1 in this embodiment shown in Fig. 1 is configured into a box shape as a whole.

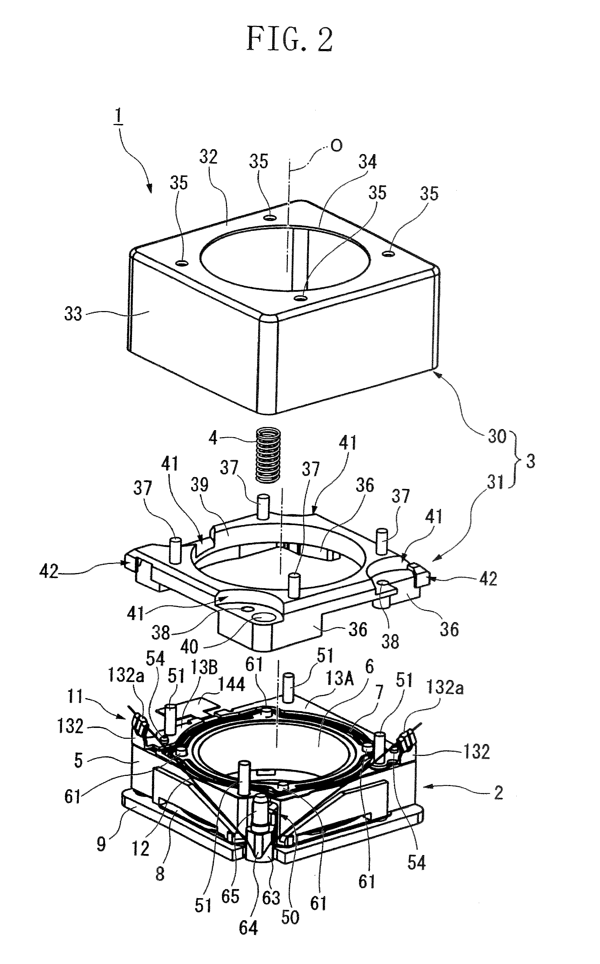

The drive module 1 is configured to be mounted on an electronic apparatus by being fixed on a substrate which supplies control signals or electric power to the drive module 1 after the completion of assembly, and the drive module 1 includes a drive unit 2 disposed on an adaptor, not shown, a top-covered cylindrical cover 3 configured to be attached to the drive unit 2 and cover the drive unit 2, and a coil spring 4 configured to urge a lens frame 6 (driven member) of the drive unit 2, described later, as shown in Fig. 2 as a general configuration. Note that the expressions "cylindrical" and "annular" as used herein do not require a perfectly cylindrical or circular annular shape but are used to imply the ability to hold or accommodate a cylinder or circle, or to imply any ring or cylinder shape, whether or not circular.

A chain line O in the drawing indicates a line of the center axis of a module frame 5 (supporting member) of the drive unit 2, described later, and the axial line O is an axial line of the drive module 1 which matches an optical axis of the lens unit, not shown, and the drive module 1 is configured to drive the lens unit, not shown, along the axial line O.

In the following description, a position and a direction may be referenced on the basis of the positional relationship with respect to the axial line O at the time of assembly in the descriptions of respective disassembled components. For example, even when the component does not have an apparent circle or a cylindrical surface, the direction along the axial line O may be referred to simply as "axial direction", the radial direction of a circle having a center on the axial line O may be referred to simply as "radial direction", and the circumferential direction of the circle having the center on the axial line O may be referred to simply as "circumferential direction" as long as there is no risk of misunderstanding. Also, unless otherwise specified, one side in the axial direction (upper side in Fig. 1) is referred to as "up" and the other side in the axial direction (lower side in Fig. 1) is referred to as "down".

### [Drive Unit]

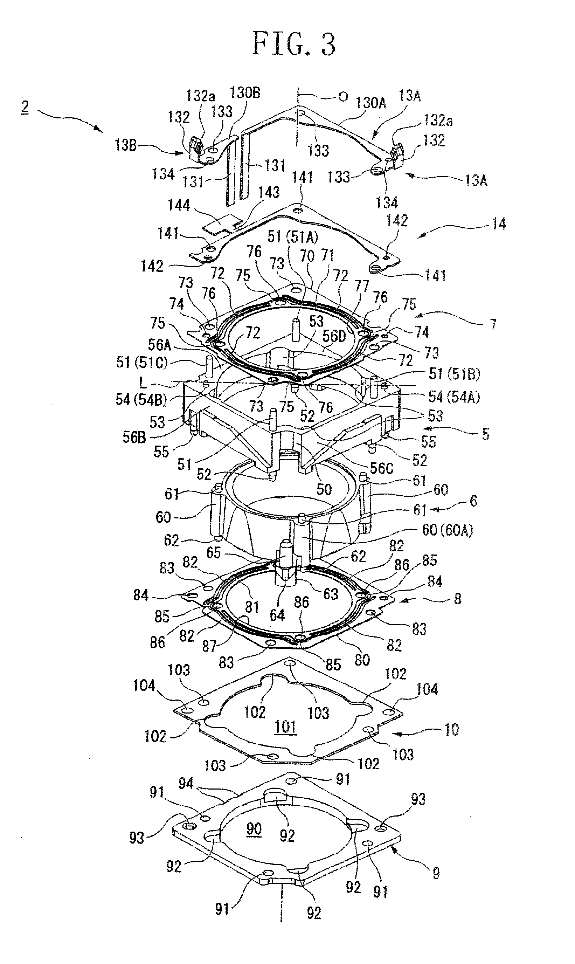

As shown in Fig. 3, the drive unit 2 includes the cylindrical module frame 5, the cylindrical lens frame 6 accommodated inside the module frame 5 and disposed coaxially with the module frame 5, an upper leaf spring 7 disposed on the module frame 5 and the lens frame 6, a lower leaf spring 8 disposed under the module frame 5 and the lens frame 6, a module lower plate 9 disposed under the lower leaf spring 8, an intermediate member 10 disposed between a module lower plate 9 and the lower leaf spring 8, and a driving means 11 (see Fig. 2) configured to reciprocally move the lens frame 6 relatively with respect to the module frame 5 in along the vertical direction (axial direction of the module frame 5).

The lens frame 6 described above is loosely inserted inward of the module frame 5 so as to be movable in the vertical direction. Then, the upper leaf spring 7, an insulating member 14, and a pair of feeding members 13A, 13B are laminated on upper surfaces of the module frame 5 and the lens frame 6 in sequence from below, and the lower leaf spring 8, the intermediate member 10, and the module lower plate 9 are laminated on lower surfaces of the module frame 5 and the lens frame 6 in sequence from above.

The above-described driving means 11 includes a Shape Memory Alloy (Shape Memory Alloy, hereinafter, referred to as SMA) wire 12 shown in Fig. 2 which extends along an outer peripheral surface of the module frame 5 and engages the lens frame 6, a pair of the feeding members 13A, 13B disposed above the upper leaf spring 7, and the insulating member 14 disposed between the feeding members 13A, 13B and the upper leaf spring 7.

Subsequently, each component of the drive unit 2 described above will be described in detail.

The module frame 5 is an annular member which accommodates the lens frame 6 inside thereof and is a supporting member which supports the lens frame 6 via the upper leaf spring 7 and the lower leaf spring 8. The outline of the entire module frame 5 is formed into a substantially rectangular shape in plan view, and includes fixing pins 51 (52) extending along the axial direction in the vicinities of four corners of an upper end surface (lower end surface) of the module frame 5 so as to project therefrom, respectively. Also, positioning pins 54 (55) extending in the axial direction are provided on the upper end surface (and the lower end surface) thereof at respective opposing corners of the module frame 5 having the substantially rectangular shape in plan view so as to project therefrom. Also, a notched portion 50 extending in the axial direction is formed on the upper end surface (and the lower end surface) thereof at one of the other opposing corners of the module frame 5 having the substantially rectangular shape in plan view, that is, at a corner where the positioning pins 54 (55) are not formed so as to project therefrom.

An inner peripheral portion of the module frame 5 is formed into a substantially circular shape in plan view, and the inner peripheral surface of the module frame 5 is formed with four guide grooves 53 extending from the lower end surface to the upper end surface of the module frame 5 in a substantially arcuate shape in plan view. The four guide grooves 53 are disposed substantially in rotational symmetry at a distance of approximately 90 degrees around the axial line O.

The module frame 5 is integrally formed of a thermoplastic resin which allows thermal caulking or ultrasonic caulking, for example, polycarbonate (PC), liquid crystal polymer (LCP) resin or the like.

The lens frame 6 is a driven member driven by the driving means 11, and is a member which is capable of reciprocally moving in the axial direction relatively with respect to the module frame 5. The lens frame 6 is a cylindrical member configured to hold a lens unit, not shown, including a lens barrel having a lens or a lens group held therein, and is formed into a substantially cylindrical shape as a whole as shown in Fig. 3. The lens frame 6 is formed with female screws, not shown, on an inner peripheral surface thereof, and male screws formed on an outer peripheral surface of the above-described lens barrel, not shown, are screwed into the female screws, whereby the lens unit, not shown, is mounted inside the lens frame 6.

Four projecting ridge portions 60 projecting radially outward and extending along the axial direction are provided on an outer peripheral surface of the lens frame 6. These four projecting ridge portions 60 serve as guide portions to be fitted into the guide grooves 53 of the module frame 5, and the projecting ridge portions 60 are disposed on the outer peripheral surface of the lens frame 6 at positions corresponding to the guide grooves 53, that is, at four positions at a distance of approximately 90 degrees around the axial line O. Upper end surfaces (and lower end surfaces) of the projecting ridge portions 60 are flush with an upper end surface (lower end surface) of the lens frame 6, and the upper end surfaces (and the lower end surfaces) of the projecting ridge portions 60 are formed with fixing pins 61 (62) extending along the axial direction so as to project therefrom.

Formed on the outer peripheral surface of the lens frame 6 is a projecting portion 63 projecting radially outward of the lens frame 6. The projecting portion 63 is a guide portion which guides the direction of movement of the lens frame 6, also is a coil engaging portion which engages a lower end of the coil spring 4 to receive a reaction force from the coil spring 4. The projecting portion 63 projects from the lateral side of a projecting ridge portion 60A, which is one of the projecting ridge portions 60, and is fitted into the notched portion 50 of the module frame 5. An upper end surface of the projecting portion 63 is formed at a level lower than the upper end surface of the lens frame 6, and a distal end portion of the projecting portion 63 is hung down to a level lower than the lower end surface of the lens frame 6.

The above-described projecting portion 63 is formed at a distal end surface thereof with a hooking portion 64 configured to allow an intermediate portion of the SMA wire 12 to be hooked thereon. The hooking portion 64 is a notched portion opening downward, and the intermediate portion of the SMA wire 12 is hooked on the hooking portion 64 from below.

The projecting portion 63 is formed at an upper end surface of the distal end portion thereof with a coil guide pin 65 which is inserted through the inside of the coil spring 4 so as to project therefrom. The coil guide pin 65 is a column-shaped pin extending along the axial direction, and a distal end portion of the coil guide pin 65 is formed into a truncated conical shape gradually reduced in diameter upward.

The lens frame 6 is formed of a thermoplastic resin which allows thermal caulking or ultrasonic caulking, for example, polycarbonate (PC), liquid crystal polymer (LCP) resin or the like.

The upper leaf spring 7 and the lower leaf spring 8 are each a flat panel-shaped leaf spring member which resiliently holds the lens frame 6 so as to be movable in the axial direction as shown in Fig. 3, and is formed of a metallic panel such as a stainless (SUS) steel panel punched in substantially the same shape in plan view. The outline of the upper leaf spring 7 (and the lower leaf spring 8) is formed into a substantially rectangular shape, which is substantially the same as the outline of the upper end portion (lower end portion) of the module frame 5, in plan view.

The upper leaf spring 7 (the lower leaf spring 8) is formed into a ring shape as a whole, and the upper leaf spring 7 (the lower leaf spring 8) is formed with a circular opening 77 (an opening 87) coaxial with the axial line O and slightly larger than the inside of the lens frame 6 at a center portion thereof.

More specifically, the upper leaf spring 7 (the lower leaf spring 8) includes a frame-shaped frame body portion 70 (80) overlapped with and connected to the upper end surface (lower end surface) of the module frame 5, a ring portion 71 (81) overlapped with and connected to the upper end surface (the lower end surface) of the lens frame 6 in a state of being disposed radially inside the frame body portion 70 (80), and spring portions 72 (82) connected at both ends thereof with the frame body portion 70 (80) and the ring portion 71 (81) to couple them both.

Formed in the vicinities of four corners of the frame body portion 70 (80) are four through holes 73 (83) which allow insertion of the respective fixing pins 51 (52) therethrough corresponding to the positions of arrangement of the upper fixing pins 51 (lower fixing pins 52) of the module frame 5. Formed at one of the opposing corners of the substantially rectangular frame body portion 70 (80) are positioning holes 74 (84) which allow insertion of the positioning pins 54 (55) of the module frame 5 therethrough.

The ring portion 71 (81) is provided with four protruding portions 75 (85) protruding radially outward from the outer periphery thereof. The protruding portions 75 (85) are arranged at regular angular intervals in the circumferential direction of the ring portion 71 (81). Formed on the respective protruding portions 75 (85) are through holes 76 (86) which allow insertion of the respective fixing pins 61 (62) therethrough corresponding to the positions of arrangement of the upper fixing pins 61 (lower fixing pins 62) of the lens frame 6.

Together, the spring portions 72 (82) form a band-shaped portion having a substantially arcuate shape, and are arranged between the ring portion 71 (81) and the frame body portion 70 (80). Then, an end portion of each spring portion 72 (82) is connected to the ring portion 71 (81) at the protruding portions 75 (85), and the other end portion thereof is connected to the frame body portion 70 (80) in the vicinities of the adjacent protruding portions 75 (85).

The upper leaf spring 7 described above is fixed to the lens frame 6 by inserting the upper fixing pins 61 of the lens frame 6 through the through holes 76 on the side of the ring portion 71 and, in this state, caulking upper end portions of the fixing pins 61 by being crushed with heat or ultrasonic wave. Also, the lower leaf spring 8 described above is fixed to the lens frame 6 by inserting the lower fixing pins 62 of the lens frame 6 through the through holes 86 on the side of the ring portion 81 and, in this state, lower end portions of the fixing pins 62 are caulked by being crushed with heat or ultrasonic wave.

As shown in Fig. 3, the module lower plate 9 is a plate member formed of a resin material having an electrical insulation property and a shielding property and the outline thereof is formed into a substantially rectangular shape of a size larger than the outline of the module frame 5 in plan view. The module lower plate 9 is formed into a ring shape as a whole, and the module lower plate 9 is formed with an opening 90 having a circular shape in plan view and having a size which allows taking the lens unit, not shown, in and out therethrough at the center thereof.

The module lower plate 9 is formed with through holes 91 which allow insertion of the lower fixing pins 52 of the module frame 5 and depressed portions 92 which avoid interference with the lower fixing pins 62 of the lens frame 6, at the four corners thereof. Formed at both end portions of one of the opposing corners of the substantially rectangular module lower plate 9 are a pair of positioning holes 93 which are fitted on the lower positioning pins 55 of the module frame 5. Formed on an outer edge portion of one of four sides of the module lower plate 9 are holding grooves 94 which hold a distal end side of external connecting terminals 131 described later.

A lower surface of the module lower plate 9 functions as a reference mounting surface when packaging the drive module 1.

The intermediate member 10 is a plate member interposed between the lower leaf spring 8 and the module lower plate 9 and the outline thereof is formed into a substantially rectangular shape in plan view which is substantially the same as the outline of the lower leaf spring 8 as shown in Fig. 3. Also, the intermediate member 10 is formed into a ring shape as a whole, and the intermediate member 10 is formed with an opening 101 having a substantially circular shape in plan view which is substantially the same as the opening 87 of the lower leaf spring 8 at the center portion thereof. The thickness of the intermediate member 10 is formed to be thicker than the thickness of the lower leaf spring 8. Then, the intermediate member 10 is formed so that the hardness of the intermediate member 10 rather than the hardness of the module lower plate 9 is closer to the hardness of the lower leaf spring 8. In this embodiment, the module lower plate 9 is formed of a resin material, while the intermediate member 10 and the lower leaf spring 8 are both formed of a metallic material such as stainless or the like. In other words, the hardness of the intermediate member 10 is the same as the hardness of the lower leaf spring 8 and is higher than the hardness of the module lower plate 9. The hardness of the respective members may be defined on the basis of Rockwell hardness defined in Japanese Industrial Standards (JIS) G0202.

Formed on an inner edge of the intermediate member 10 are notched portions 102 having a substantially arcuate shape in plan view for avoiding interference with the lower fixing pins 62 of the lens frame 6. The notched portions 102 are disposed respectively on the inner edge of the intermediate member 10 at positions corresponding to the lower fixing pins 62 of the lens frame 6, that is, at four positions at a distance of approximately 90 degrees around the axial line O. Also, formed in the vicinities of four corners of the intermediate member 10 corresponding to positions of arrangement of the lower fixing pins 52 of the module frame 5 are four through holes 103 which allow insertion of the respective lower fixing pins 52 therethrough. Also, formed at one of the opposing corners of the substantially rectangular intermediate member 10 are positioning holes 104 which allow insertion of the lower positioning pins 55 of the module frame 5 therethrough.

The through holes 83 of the above-described lower leaf spring 8 on the side of the frame body portion 80, the through holes 103 of the intermediate member 10 and the through holes 91 of the module lower plate 9 are disposed at positions aligned with each other in plan view, so that the through holes 83, 103, 91 communicate with each other. Then, lower end portions of the lower fixing pins 52 on the lower side of the module frame 5 are crushed and caulked with heat or ultrasonic wave in a state in which the lower fixing pins 52 are inserted through the through holes 83, 103, 81, so that the lower leaf spring 8, the intermediate member 10, and the module lower plate 9 are fixed to the module frame 5 together in a state of being laminated.

A pair of the feeding members 13A, 13B are disposed between the upper leaf spring 7 and the cover 3 as shown in Fig. 2, and are members supplying electricity to the SMA wire 12, and holding end portions of the SMA wire 12 respectively. The feeding members 13A, 13B include plate shaped conductive plates 130A, 130B laminated on the upper end surface of the module frame 5 in a state of interposing the upper leaf spring 7 and the insulating member 14 therebetween, the external connecting terminals 131 extending integrally from the conductive plates 130A, 130B and bent toward the module lower plate 9 by approximately 90 degrees, and wire holding terminals 132 extending integrally from the conductive plates 130A, 130B, bent upward (towards a side of a top wall portion 32 of an exterior packaging member 30 described later) by approximately 90 degrees and configured to hold the end portions of the SMA wire 12 as shown in Fig. 3.

In this embodiment, shapes of the conductive plates 130A, 130B of a pair of the feeding members 13A, 13B are different from each other. More specifically, the one conductive plate 130A extends along the shape of the upper end surface of the module frame 5 and is formed into a substantially angular C shape bent significantly twice in plan view, and the other conductive plate 130B extends along the shape of the upper end surface of the module frame 5 and is formed into a straight shape with no bend in plan view.

Then, a pair of these conductive plates 130A, 130B are laminated only on a substantially half area of the upper end surface of the module frame 5 (the side where the notched portion 50 is not formed) divided by a diagonal line L connecting one of the opposing corners (a line connecting positioning pins 54A, 54B).

Formed on the one conductive plate 130A are two through holes 133 which allow penetration of a fixing pin 51A positioned at a corner of the module frame 5 diagonally opposing the notched portion 50 (the side opposite from the notched portion 50 in the radial direction across the axial line O) and a fixing pin 51B**,** which is one of fixing pins positioned in the vicinity of the above-described diagonal line L, respectively, and also positioning holes 134 which allow penetration of a positioning pin 54A, which is one of positioning pins positioned on the diagonal line L.

Formed on the other conductive plate 130B is a through hole 133 which allows penetration of the other fixing pin 51C positioned in the vicinity of the diagonal line L and a positioning hole 134 which allows penetration of the other positioning pin 54B positioned on the diagonal line L. Then, a pair of the conductive plates 130A, 130B are integrally fixed to the module frame 5 using the above-described respective fixing pins 51A to 51C.

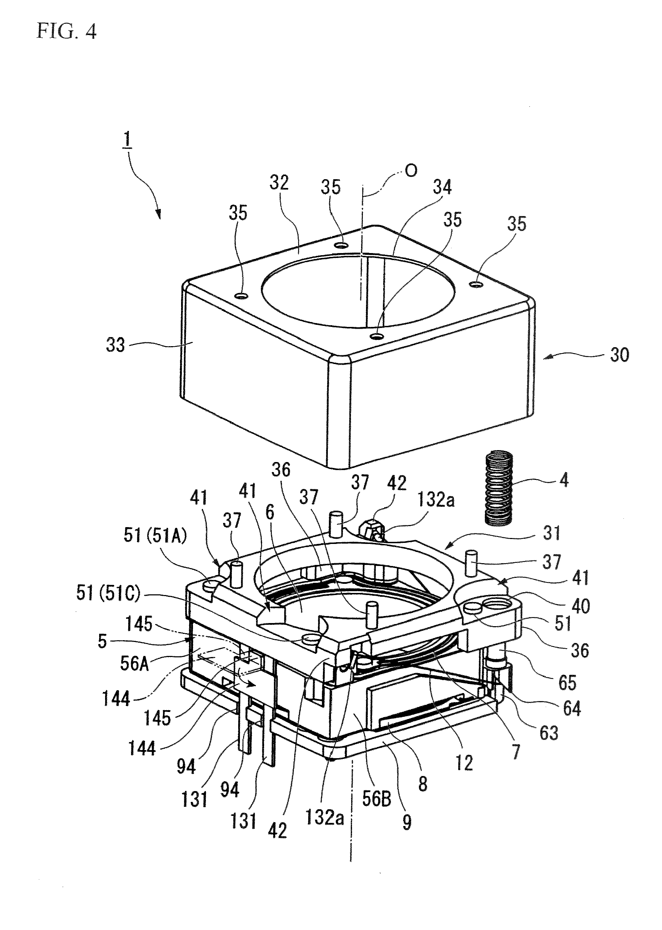

The external connecting terminals 131 continue to the conductive plates 130A, 130B respectively so as to align in parallel at a distance in the circumferential direction. The external connecting terminals 131 come into contact with an outer surface of a side wall portion 56A of the module frame 5 positioned between the corner of the module frame 5 diagonally opposing the notched portion 50 and the corner where the above-described other positioning pin 54B is disposed, and the distal end portions thereof enter the holding grooves 94 formed on the outer edge portion of the module lower plate 9 and are fitted and held thereby. The external connecting terminals 131 are adjusted in length so as to project downward from the module lower plate 9 (see Fig. 4).

The wire holding terminals 132 are formed continuously from the respective conductive plates 130A, 130B so as to be positioned above two side wall portions 56B, 56C out of four side wall portions 56A to 56D of the module frame 5, which are adjacent to each other in the circumferential direction with the notched portion 50 therebetween. In other words, the wire holding terminals 132 are formed continuously from the conductive plates 130A, 130B in the vicinities of the positioning holes 54A, 54B. The distal end portions of the wire holding terminals 132 are bent backward at positions protruding upward from the upper end surface of the module frame 5 and are caulked to serve as a wire holding portion 132a (holding portion) which hold the end portions of the SMA wire 12.

The insulating member 14 is an insulating sheet laminated between the upper leaf spring 7 and a pair of the conductive plates 130A, 130B, and is formed into a shape corresponding to the shape in which a pair of the conductive plates 130A, 130B are combined as shown in Fig. 3. Then, the insulating member 14 is formed with three through holes 141 which allow penetration of the fixing pins 51A to 51C of the module frame 5 and two positioning holes 142 which allow penetration of the two positioning pins 54A, 54B, respectively, corresponding to the through holes 133 and the positioning holes 134 formed respectively on a pair of the conductive plates 130A, 130B.

The insulating member 14 is formed with a bent sheet portion 144 bent along the attachment of the exterior packaging member 30 which constitutes the cover 3 and interposed between the external connecting terminals 131 and the exterior packaging member 30. The bent sheet portion 144 is disposed radially outside of the external connecting terminals 131 via a connecting portion 143 having a narrower width than the distance between a pair of the external connecting terminals 131 in a state before being bent and the connecting portion 143 and the bent sheet portion 144 are formed into a substantially T-shape in plan view as a whole. Then, at the time of the attachment of the exterior packaging member 30, portions of a pair of the external connecting terminals 131 which come into contact with the outer surface of the side wall portion 56A of the module frame 5 are covered over and protected, whereby direct contact between the exterior packaging member 30 and the external connecting terminals 131 is restrained (see Fig. 4).

The SMA wire 12 is a wire which is contracted by heat generated at the time of energization, is held by a pair of the wire holding portions 132a described above at the both end portions thereof and engaged with the hooking portion 64 of the lens frame 6 at the intermediate portion thereof from below, and is bent into a substantially V-shape along the outer peripheral surface of the module frame 5.

### [Cover]

As shown in Fig. 2, the cover 3 includes the metallic exterior packaging member 30 configured to cover the outer periphery of the drive unit 2 and a resin spacer 31 attached to the exterior packaging member 30 and disposed on the upper side in the axial direction of the module frame 5.

The exterior packaging member 30 is a metallic member having a top-covered cylindrical shape configured to accommodate the drive unit 2 on the inside thereof and, is formed of, for example, a stainless (SUS) steel plate. The exterior packaging member 30 includes the top wall portion 32 having a rectangular shape in plan view disposed orthogonal with respect to the axial line O and a peripheral wall portion 33 having a shape of a square tube hung from an outer edge of the top wall portion 32 and extending along the axial direction. Formed at the center of the top wall portion 32 is an opening 34 having a circular shape in plan view having a size which allows taking the lens unit, not shown, in and out therethrough. Also, formed in the vicinities of four corners of the top wall portion 32 are four through holes 35 which allow insertion of respective fixing pins 37 therethrough corresponding to the position of arrangement of the fixing pins 37 of the spacer 31, described later.

The module lower plate 9 is positioned inside a lower end portion of the peripheral wall portion 33.

The spacer 31 is a resin member fitted inside the exterior packaging member 30 and interposed between a lower surface of the top wall portion 32 of the exterior packaging member 30 and an upper surface of the drive unit 2, and is formed of thermoplastic resin such as polycarbonate (PC), liquid crystal polymer (LCP) resin, or the like. More specifically, the outline of the spacer 31 is formed into a substantially rectangular shape in plan view, which is substantially the same shape as an inner peripheral portion of the peripheral wall portion 33 of the exterior packaging member 30. Also, the spacer 31 is formed into a ring shape as a whole, and the spacer 31 is formed with an opening 39 having a circular shape in plan view and having a size which allows taking the lens unit, not shown, in and out therethrough at the center thereof. The spacer 31 is provided with engaging portions 36 which are engaged with the upper surface of the drive unit 2 so as to project downward.

Formed in the vicinities of four corners of the spacer 31 are the fixing pins 37 extending along the axial direction corresponding to the positions of arrangement of the through holes 35 of the exterior packaging member 30, and four through holes 38 which allow insertion of the respective fixing pins 51 therethrough corresponding to the positions of arrangement of the upper fixing pins 51 of the module frame 5. Formed at a corner of the spacer 31 at a position corresponding to the coil guide pin 65 of the lens frame 6 is a coil guide hole 40 which accommodates the coil spring 4. The coil guide hole 40 is a through hole circular in plan view opening at an upper end and a lower end respectively.

Recessed portions 41 depressed in a stepped manner are formed in the vicinities of the four corner portions of an upper end of the spacer 31, and upper ends of the above-described through holes 38 and the upper end of the coil guide hole 40 are opened at bottom surfaces of the recessed portions 41, respectively. Lower ends of the above-described through holes 38 and the lower end of the coil guide hole 40 are opened on lower surfaces of the above-described engaging portions 36 respectively.

Formed on an outer periphery of the spacer 31 are storage portions 42 configured to accommodate a pair of the wire holding portions 132a that hold the both end portions of the SMA wire 12. The storage portions 42 are formed respectively on side surfaces of portions corresponding to the positions of the wire holding portions 132a, that is, one of the opposing corners of the spacer 31 having a substantially rectangular shape in plan view. The storage portions 42 are each a space defined by wall surfaces which surround the rear, above, and lateral sides of the wire holding portion 132a when the side of the intermediate portion of the SMA wire 12 is defined to be the front and the side of the end portions of the SMA wire 12 is defined to be the rear, and the wire holding portions 132a can be fitted to the storage portions 42 from below.

The spacer 31 having a configuration as described above is a positioning member for achieving the positioning of the cover 3 (the exterior packaging member 30) in the axial direction and, when the lower surfaces of the engaging portions 36 come into abutment with the upper surface of the drive unit 2 and the upper surface of the spacer 31 comes into abutment with the lower surface of the top wall portion 32 of the exterior packaging member 30, the position of the cover 3 (the exterior packaging member 30) in the axial direction is achieved.

The through holes 38 of the spacer 31, the through holes 133 of a pair of the feeding members 13A, 13B, the through holes 141 of the insulating member 14, and the through holes 73 of the upper leaf spring 7 on the side of the frame body portion 70 are disposed at positions aligned with each other in plan view, and the through holes 38, 133, 141, 73 communicate with each other. Then, upper end portions of the fixing pins 51 of the module frame 5 are crushed and caulked with heat or ultrasonic wave as shown in Fig. 4 in a state in which the upper fixing pins 51 are inserted through the through holes 38, 133, 141, 73, so that the upper leaf spring 7, the insulating member 14, the feeding members 13, and the spacer 31 are fixed to the module frame 5 together in a state of being laminated.

Upper end portions of the fixing pins 37 of the spacer 31 described above are crushed and caulked with heat or ultrasonic wave as shown in Fig. 1 in a state in which the fixing pins 37 are inserted through the through holes 35 of the above-described exterior packaging member 30, so that the exterior packaging member 30 is fixed to the spacer 31.

### [Coil Spring]

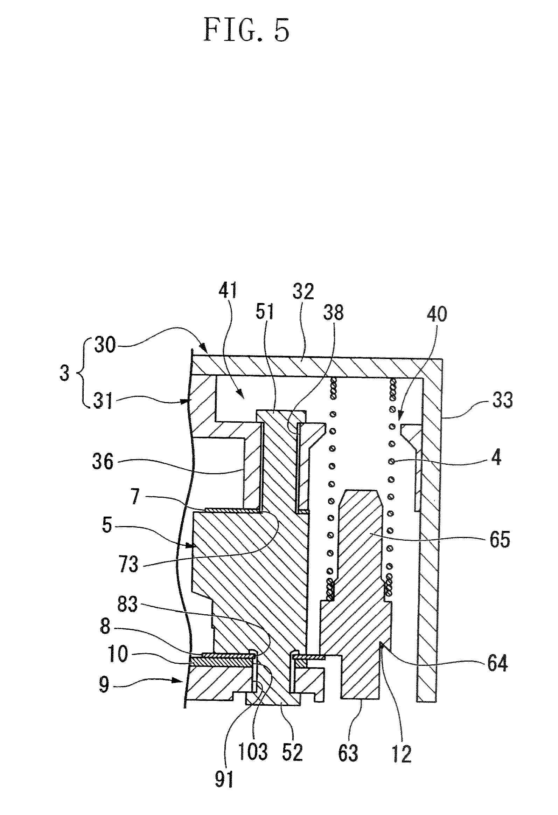

The coil spring 4 is an urging member configured to urge the lens frame 6 relatively with respect to the module frame 5 along the axial direction, and is made up of a known coil spring extending along the axial direction. The coil spring 4 is inserted through the inside of the above-described coil guide hole 40 as shown in Fig. 5, and the coil guide pin 65 of the lens frame 6 is inserted therein from below. The lower end of the coil spring 4 is engaged with the upper surface of the distal end portion of the projecting portion 63 of the lens frame 6, and the upper end of the coil spring 4 is engaged with the lower surface of the top wall portion 32 of the exterior packaging member 30, and the coil spring 4 is interposed between the projecting portion 63 and the top wall portion 32 in a state of being compressed in the axial direction. As shown in Fig. 4, after having mounted the spacer 31 on the drive unit 2, the coil spring 4 is inserted into the coil guide hole 40 from the upper end of the coil guide hole 40, and then the exterior packaging member 30 is covered thereon, whereby the coil spring 4 is interposed between the projecting portion 63 and the top wall portion 32.

### [Operation of Drive Module]

Subsequently, an operation of the drive module 1 having a configuration described above will be described.

First of all, in a state in which electric power is not supplied to the external connecting terminals 131 of a pair of the feeding members 13A, 13B, only an urging force from the coil spring 4 acts on the lens frame 6. At this time, downward movement of the lens frame 6 is restrained by the module lower plate 9. By the operation of the coil spring 4, even when the SMA wire 12 is contracted due to the ambient temperature, lifting up of the lens frame 6 can be restrained, and positioning of the lens frame 6 to a reference position of driving is achieved.

Subsequently, when electric power for standby is supplied to the external connecting terminals 131 of a pair of the feeding members 13A, 13B, the SMA wire 12 generates heat at a predetermined temperature and contracts. Accordingly, the lens frame 6 moves upward, and is stopped at a predetermined position (standby position) where a tension of the SMA wire 12 and the urging force of the coil spring 4 are balanced.

Subsequently, when electric power for driving is supplied to the feeding members 13, the SMA wire 12 generates heat according to the electric energy and expands or contracts. Accordingly, the lens frame 6 can be moved in the Z-direction to a position where the tension of the SMA wire 12 and the urging force of the coil spring 4 are balanced.

In other words, when electric power is supplied to the feeding members 13, electric current flows through the SMA wire 12 and Joule heat is generated, and the temperature of the SMA wire 12 is increased. When the temperature of the SMA wire 12 exceeds a transformation-start temperature, the SMA wire 12 contracts to a length corresponding to the temperature. The both end portions of the SMA wire 12 are held by the wire holding portions 132a of a pair of the feeding members 13A, 13B positioned above the upper end surface of the module frame 5, respectively, and the intermediate portion of the SMA wire 12 is engaged with the projecting portion 63 of the lens frame 6, so that the contraction of the SMA wire 12 causes the projecting portion 63 to generate a generative force (drive force), thereby moving the lens frame 6 upward along the axial direction.

When the lens frame 6 moves, the coil spring 4 is deformed, and a resilient restoration force corresponding to an amount of deformation is applied to the lens frame 6. The movement of the lens frame 6 is stopped at a position where the resilient restoration force is balanced with the tensile force of the SMA wire 12. Then, the lens frame 6 can be moved in the vertical direction and stopped at a predetermined position by adjusting an amount of power supply to the feeding members 13 and controlling a calorific value of the SMA wire 12.

### [Assembly of Drive Module]

Subsequently, a method of assembling the above-described drive module 1 will be described below.

First of all, the lens frame 6 is inserted into the module frame 5 from below, and the lens frame 6 and the module frame 5 are temporarily fixed in a state in which the upper end surface of the module frame 5 and the upper end surface of the lens frame 6 are aligned to the same level.

Subsequently, the upper leaf spring 7 is laminated on the upper end surface of the module frame 5 and the upper end surface of the lens frame 6. At this time, the upper leaf spring 7 is laminated while fitting the through holes 76 on the side of the ring portion 71 of the upper leaf spring 7 onto the upper fixing pins 61 of the lens frame 6, and fitting the through holes 73 and the positioning holes 74 on the side of the frame body portion 70 of the upper leaf spring 7 onto the upper fixing pins 51 and the positioning pins 54 of the module frame 5, respectively. Accordingly, the upper leaf spring 7 can be laminated while positioning accurately with respect to the module frame 5 and the lens frame 6.

Subsequently, the distal end portions of the upper fixing pins 61 of the lens frame 6 projecting upward through the through holes 76 of the upper leaf spring 7 are caulked to combine the lens frame 6 and the upper leaf spring 7. At this time, the upper end surface of the lens frame 6 and the upper end surface of the module frame 5 are flush with each other, so that caulking operation can be performed by arranging the flat panel-shaped upper leaf spring 7 without deformation. Therefore, since it is not necessary to hold the deforming upper leaf spring 7, the caulking operation can be performed easily, and occurrence of lifting or the like of the upper leaf spring 7 due to the deformation thereof can be prevented.

Subsequently, the lower leaf spring 8 is laminated on the lower end surface of the module frame 5 and the lower end surface of the lens frame 6. At this time, the lower leaf spring 8 is laminated while fitting the through holes 86 on the side of the ring portion 81 of the lower leaf spring 8 onto the lower fixing pins 62 of the lens frame 6, fitting the through holes 83 on the side of the frame body portion 80 of the lower leaf spring 8 onto the lower fixing pins 52 of the module frame 5, and fitting the positioning holes 84 of the lower leaf spring 8 onto the lower positioning pins 55 of the module frame 5. Accordingly, the lower leaf spring 8 can be laminated while positioning accurately with respect to the module frame 5 and the lens frame 6.

Subsequently, the distal end portions of the lower fixing pins 62 of the lens frame 6 projecting downward through the through holes 86 of the lower leaf spring 8 are caulked to combine the lens frame 6 and the lower leaf spring 8. At this time, since the distance between the upper end surface and the lower end surface of the lens frame 6 in the axial direction and the distance between the upper end surface and the lower end surface of the module frame 5 in the axial direction are equal, the lower end surfaces of the module frame 5 and the lens frame 6 are flush with each other, so that the caulking operation can be performed without deforming the flat panel-shaped lower leaf spring 8.

Subsequently, the intermediate member 10 and the module lower plate 9 are further laminated on the lower leaf spring 8 assembled to the lens frame 6. At this time, the intermediate member 10 and the module lower plate 9 are laminated while fitting the through holes 103, 91 of the intermediate member 10 and the module lower plate 9 onto the fixing pins 52 of the module frame 5 projecting downward of the lower leaf spring 8, and fitting the positioning holes 104, 93 of the intermediate member 10 and the module lower plate 9 onto the positioning pins 55 of the module frame 5 projecting downward of the lower leaf spring 8. Accordingly, the intermediate member 10 and the module lower plate 9 can be laminated while positioning accurately with respect to the module frame 5.

Subsequently, the distal end portions of the lower fixing pins 52 of the module frame 5 projecting downward through the through holes 91 of the module lower plate 9 are caulked. Accordingly, the module frame 5, the lower leaf spring 8, the intermediate member 10, and the module lower plate 9 can integrally be assembled.

Since the module lower plate 9 is formed with the depressed portions 92, the lower fixing pins 62 of the lens frame 6 previously caulked for fixing the lower leaf spring 8 do not come into contact with the module lower plate 9. The module lower plate 9 is formed with depressed portions on the lower surface thereof, the lower ends of the through holes 91 of the module lower plate 9 are opened in the depressed portions and the distal end portions of the lower fixing pins 52 of the module frame 5 are stored in the above-described depressed portions, so that the distal end portions of the fixing pins 52 after caulking do not project downward of the lower surface of the module lower plate 9.

Subsequently, the insulating member 14 and the conductive plates 130A, 130B of a pair of the feeding members 13A, 13B are further laminated on the upper leaf spring 7 assembled to the lens frame 6. At this time, the insulating member 14 and a pair of the conductive plates 130A, 130B of a pair of the feeding members 13A, 13B are laminated while fitting the through holes 141, 133 of the insulating member 14 and the feeding members 13A, 13B on the upper fixing pins 51 of the module frame 5 projecting upward of the upper leaf spring 7, and fitting the positioning holes 142, 134 of the insulating member 14 and the feeding members 13A, 13B on the upper positioning pins 54 of the module frame 5 projecting upward of the upper leaf spring 7.

Accordingly, the insulating member 14 and a pair of the feeding members 13A, 13B can be laminated while positioning accurately with respect to the module frame 5. At this time, the distal end portions of the external connecting terminals 131 of a pair of the feeding members 13A, 13B are fitted into the holding grooves 94 formed on the outer edge portion of the module lower plate 9.

Subsequently, an operation for fixing the SMA wire 12 is performed.

Specifically, the end portions of the SMA wire 12 are wound around the wire holding portions 132a of a pair of the feeding members 13A, 13B respectively in a state in which the intermediate portion of the SMA wire 12 is hooked on the hooking portion 64 formed on the projecting portion 63 of the lens frame 6. At this time, tension is adjusted so that the SMA wire 12 has a predetermined tension. Then, the wire holding portions 132a are caulked to hold the both end portions of the SMA wire 12. Accordingly, the state shown in Fig. 2 is assumed, and the assembly of the drive unit 2 is completed.

Subsequently, the spacer 31 is laminated by covering the same on the drive unit 2. At this time, the spacer 31 is laminated while inserting the upper fixing pins 51 of the module frame 5 projecting upward of a pair of the feeding members 13A, 13B through the through holes 38 of the spacer 31. After having laminated the spacer 31, the distal end portions of the fixing pins 51 projecting from the bottom surfaces of the recessed portions 41 are caulked. Accordingly, the drive unit 2 and the spacer 31 can integrally be assembled as shown in Fig. 4.

Subsequently, the coil spring 4 is inserted into the coil guide hole 40 of the spacer 31 to cover the coil spring 4 on the coil guide pin 65, then the exterior packaging member 30 is covered from above the spacer 31, whereby the exterior packaging member 30 and the spacer 31 are assembled. At this time, the exterior packaging member 30 is covered so that the fixing pins 37 of the spacer 31 are inserted through the through holes 35 formed on the top wall portion 32. Then, the distal end portions of the fixing pins 37 of the spacer 31 are caulked to fix the exterior packaging member 30. Accordingly, the assembly of the drive module 1 is completed and the drive module 1 shown in Fig. 1 is obtained.

When packaging the drive module 1, it is achieved by attaching an adapter, not shown, to the lower surface of the module lower plate 9, and packaging the same on a control substrate or the like, not shown. Mounting on the control substrate may be achieved by employing fixing means such as adhesion or fitting.

### [Effects and Advantages of Drive Module]

In particular, according to the drive module 1 of this embodiment, the following effects and advantages are achieved.

First of all, since the drive unit 2 is covered with the metallic exterior packaging member 30, the influence of the electromagnetic field from the outside is blocked. Therefore, requirements of an electromagnetic shield are satisfied.

Also, since the resin-made spacer 31 attached to the exterior packaging member 30 can be formed easily into a complex shape, the engaging portions 36 which engage the drive unit 2 or the coil guide hole 40 can easily be formed.

Also, by the engaging portions 36 of the above-described spacer 31 engaged with the drive unit 2, the positioning of the cover 3 in the axial direction is achieved, so that accuracy of assembly of the cover 3 with respect to the drive unit 2 is stabilized.

When the spacer 31 is covered, the end portions of the SMA wire 12 held by the wire holding portions 132a are accommodated in the storage portions 42 of the spacer 31, the end portions of the SMA wire 12 projecting from the wire holding portions 132a can be trapped in interiors of the storage portions 42. Therefore, contact between the end portions of the SMA wire 12 and the metallic exterior packaging member 30 is prevented. Therefore, electric problems by the contact of the SMA wire 12 with respect to the exterior packaging member 30 can be prevented.

Since the coil spring 4 is restrained from falling down by being accommodated in the inside of the coil guide hole 40, the coil spring 4 is prevented from being disconnected due to the interference with the exterior packaging member 30 or being assembled in a bent state when assembling the exterior packaging member 30. Accordingly, workability at the time of assembly of the drive module 1 can be improved.

Since the drive module 1 is assembled by inserting the coil spring 4 from an upper end of the coil guide hole 40 and then covering the exterior packaging member 30 thereon after having assembled the spacer to the drive unit 2, the coil spring 4 does not interfere with the spacer 31 when assembling the spacer 31, so that assembling work of the spacer 31 is easy. What is necessary is only to insert the coil spring 4 into the coil guide hole 40, the assembling work of the coil spring 4 is also easy. Therefore, further improvement of the workability at the time of assembly of the drive module is achieved.

In addition, the external connecting terminals 131 and the wire holding terminals 132 are continuously formed from the conductive plates 130A, 130B, and the feeding members 13A, 13B having both terminals 131, 132 integrated therewith are provided, manufacture and assembly are efficiently achieved.

In other words, only by fixing the conductive plates 130A, 130B laminated on the upper end surface of the module frame 5 by using the fixing pins 51 in the manufacture and assembly stage, assemblies of the external connecting terminals 131 and the wire holding terminals 132 with respect to the module frame 5 are simultaneously finished. Therefore, unlike the related art, it is not necessary to perform the assembly works for the external connecting terminals 131 and the wire holding terminals 132 respectively while changing a posture of the module frame 5 or the like. Therefore, reduction of assembly steps is achieved, and hence the efficient manufacture and assembly are achieved effectively.

In particular, since the change of posture of the module frame 5 is not necessary and the assemblies of the external connecting terminals 131 and the wire holding terminals 132 can be performed simultaneously by assembly from one direction (above), the reduction of the assembly steps can be achieved effectively.

Also, since the external connecting terminals 131 and the wire holding terminals 132 are integrated, the reduction of the number of components is achieved and, in addition, it is not necessary to perform the assembling work while paying attention to a state of continuity of the both terminals 131, 132. In addition, since the conduction between the external connecting terminals 131 and the wire holding terminals 132 is ensured, improvement of yield ratio can be expected.

Also, since the external connecting terminals 131 are in contact with the side wall portion 56A of the module frame 5, and the distal end portions are held in the holding grooves 94 of the module frame 5, stability is achieved with less rattling. Therefore, stability of the electric connection with the outside can easily be achieved, so that reliability of operation is enhanced.

Also, since portions in the vicinities of the connecting portions between the wire holding terminals 132 and the conductive plates 130A, 130B can be fixed with the fixing pins 51, lifting of the conductive plates 130A, 130B or deformation of the wire holding terminals 132 can be restrained at the time of driving of the lens frame 6. Therefore, the end portions of the SMA wire 12 can be held further stably, and the lens frame 6 can be driven accurately by expanding and contracting the SMA wire 12 with high degree of accuracy.

Also, since the conductive plates 130A, 130B and the upper leaf spring 7 are prevented from being electrically connected by restraining direct contact between the conductive plates 130A, 130B and the upper leaf spring 7 by the insulating member 14, electric problems caused by the contact can hardly occur. In addition, since the direct contact between the external connecting terminals 131 and the exterior packaging member 30 can be restricted by the bent sheet portion 144, the external connecting terminals 131 are not tend to scar easily at the time of mounting of the exterior packaging member 30 and, in addition, the electric problems caused by the contact between the metallic exterior packaging member 30 and the external connecting terminals 131 can hardly occur.

### [Electronic Apparatus]

Subsequently, an embodiment of an electronic apparatus according to the present invention will be described. For reference sake, a cellular phone with camera provided with the drive module 1 in the above-described embodiment will be described as an example of the electronic apparatus.

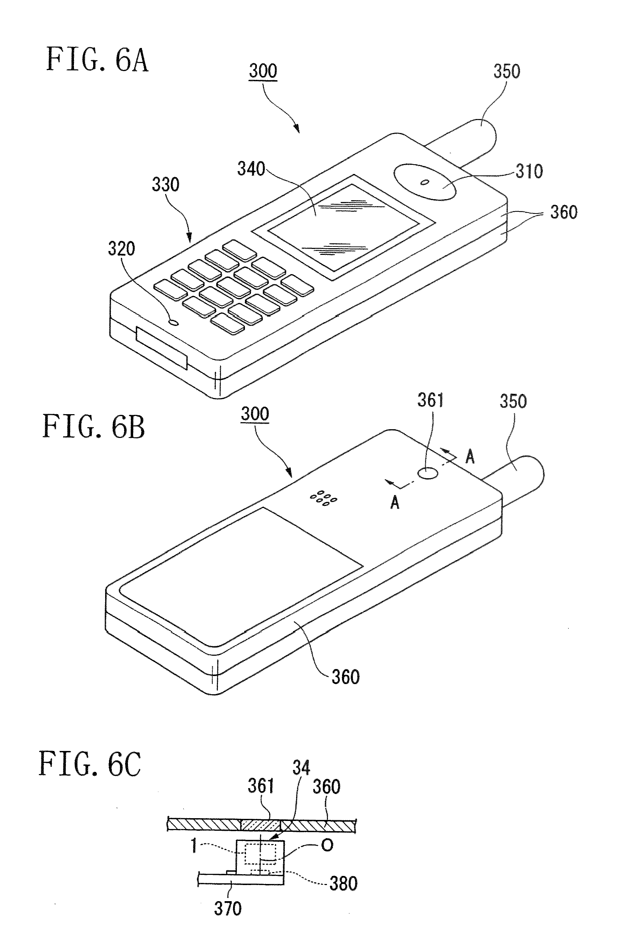

Figs. 6A, 6B and 6C are explanatory drawings of a cellular phone with camera 300. Fig. 6A is an appearance perspective view of a front side (the side of an operating surface) of the cellular phone with camera 300. Fig. 6B is an appearance perspective view of a back side of the cellular phone with camera 300. Fig. 6C is a cross-sectional view taken along the line A-A in Fig. 6B. As shown in Fig. 6A, the cellular phone with camera 300 in this embodiment includes a receiver unit 310, a transmitter unit 320, an operating portion 330, a liquid crystal display portion 340, an antenna portion 350, and electronic parts of known cellular phones such as a control circuit unit, not shown, inside and outside a housing 360.

As shown in Fig. 6B, the housing 360 on the back of the side where the liquid crystal display portion 340 is provided is provided with a window 361 which allows outside light to pass through.

Then, as shown in Fig. 6C, the drive module 1 is installed so that an opening 34 of the cover 3 of the drive module 1 faces the window 361 of the housing 360, and the axial line O extends along the direction of a line normal to the window 361. The drive module 1 is mechanically and electrically connected to a substrate 370. The substrate 370 is connected to the control circuit unit, not shown, and is configured to be capable of supplying electric power to the drive module 1.

With this configuration, light passed through the window 361 is condensed by a lens unit, not shown, of the drive module 1, so that an image can be formed on an image pickup device 380. Then, by supplying suitable electric power from the control circuit unit to the drive module 1, the lens unit can be moved in the axial direction to adjust a focus position, so that shooting is enabled.

In particular, the cellular phone with camera 300 in this embodiment is provided with the drive module 1 which can satisfy the requirement of the electromagnetic shield, so that the influence of the electromagnetic field on the drive module 1 from the outside is blocked, and the cellular phone with camera 300 superior in reliability of the operation of the camera function is provided.

Although the embodiments of the drive module and the electronic apparatus according to the present invention have been described thus far, the present invention is not limited to the above-described embodiment and may be changed as needed without departing the scope of the invention.

For example, although the drive module 1 has been described on the basis of a case where the drive module 1 is used for a focus position adjusting mechanism of the lens unit in the embodiment described above, the application of the drive module 1 is not limited thereto. For example, the drive module 1 may be used to other portion as an adequate actuator for moving a driven member to a target position. For example, the drive module 1 may be used as an adequate actuator by screwing a rod member or the like therein instead of the lens unit or by changing the lens frame 6 into other shapes. In other words, the driven member is not limited to a cylindrical member, but may be a column- or other-shaped member.

Although the present invention is described on the basis of the example of the cellular phone with camera 300 as the electronic apparatus employing the drive module 1 in the embodiment described above, the type of the electronic apparatus is not limited thereto. For example, the drive module 1 may be used in optical apparatuses such as digital cameras or cameras having a personal computer integrated therein, or as an actuator intended to move the driven member to the target position in the electronic apparatuses such as information read and memory devices or printers.

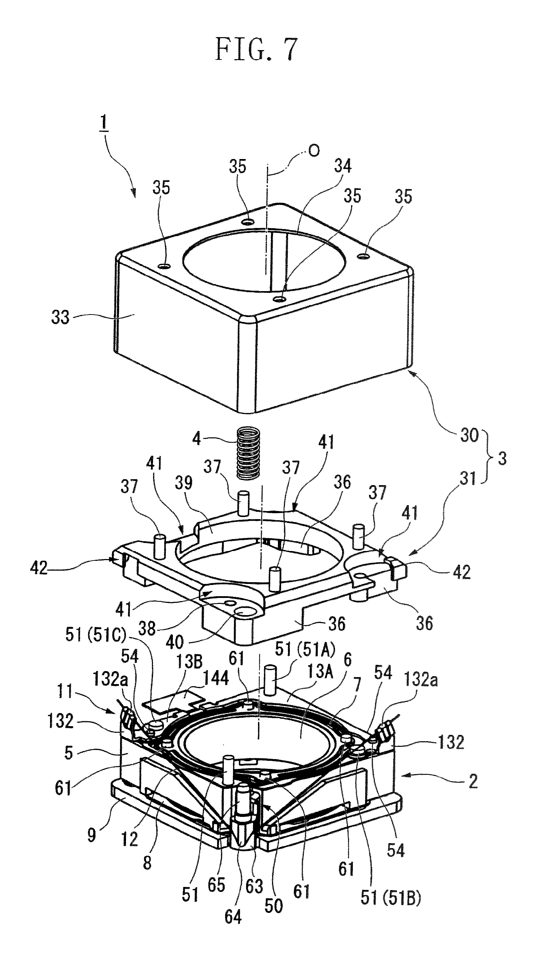

Although all of the four upper fixing pins 51 of the module frame 5 are caulked on the spacer 31 in the embodiment described above, it is also applicable to caulk the two fixing pins 51B**,** 51C positioned in the vicinity of the positioning pins 54 out of the four fixing pins 51 of the module frame 5 as shown in Fig. 7 in a stage before covering the spacer 31, more specifically, before performing the operation of fixing the SMA wire 12, thereby fixing the conductive plates 130A, 130B of a pair of the feeding members 13A, 13B to the module frame 5 respectively.

In this configuration, since the wire holding terminals 132 are further stabilized at the time of fixing the SMA wire 12, the operation of fixing the SMA wire 12 can be performed further smoothly. In particular, since portions in the vicinities of the connecting portions between the wire holding terminals 132 and the conductive plates 130A, 130B can be fixed, stabilization of the wire holding terminals 132 can be achieved easily.

In the embodiment described above, although the exterior packaging member 30 is fixed using the four fixing pins 37 of the spacer 31, the number of the fixing pins 37 is not limited to four, and may be designed freely.

Furthermore, the exterior packaging member 30 may be fixed without using the fixing pins 37. For example, it is also applicable to adhesively fix the lower end portion of the peripheral wall portion 33 of the exterior packaging member 3 and the outer edge portion of the module lower plate 9 with an adhesive agent, or to fix the same by providing claw portions on the lower end portion of the peripheral wall portion 33 and bending the claw portions back toward the lower surface of the module lower plate 9 to achieve engagement.

Although the driving means 11 using the SMA wire 12 is provided in the embodiment described above, the driving means in the present invention may be modified as needed and, for example, driving means using a rack and pinion is also applicable.

Also, it is also possible to replace the components in the embodiment described above with known components as needed without departing the scope of the present invention, and the modifications described above may be combined as needed.

## Claims

1. A drive module (1) comprising:
a drive unit (2) including a supporting member (5), a driven member (6) accommodated inside the supporting member, and driving means (11) configured to reciprocally move the driven member along the axial direction of the supporting member; and
a top-covered cover (3) configured to be attached to the drive unit and cover the drive unit,
wherein the cover includes a metallic exterior packaging member (30) configured to cover at least an outer periphery of the drive unit and a resin-made spacer (31) attached to the exterior packaging member, and
the spacer is formed with an engaging portion (37) configured to be engaged with the drive unit to achieve positioning of the cover.

2. The drive module according to Claim 1,
wherein the drive means includes a Shape Memory Alloy wire (12) held at both end portions thereof by holding portions (132) and hooked at an intermediate portion to a hooking portion (63) of the driven member, and a feeding member (13) configured to feed electricity to the Shape Memory Alloy wire via the holding portions, and
the spacer is formed with storage portions (42) configured to accommodate the holding portions.

3. An electronic apparatus (300) comprising the drive module according to Claim 1 or 2.
